# EUROPÄISCHE PATENTSCHRIFT

(11) **EP 2 218 633 B1**
(45) Veröffentlichungstag und Bekanntmachung des Hinweises auf die Patenterteilung: **14.12.2011**
(21) Anmeldenummer: 09013556.7
(22) Anmeldetag: 28.10.2009
(51) Int. Cl.: B62D 65/18

(54) **Montageverfahren für Kraftfahrzeuge**
Assembly method for motor vehicles
Procédé de montage pour véhicules automobiles

(30) Priorität: 14.02.2009 DE 102009010456
(43) Veröffentlichungstag der Anmeldung: 18.08.2010
(73) Patentinhaber: Dr. Ing. h.c. F. Porsche AG, 70435 Stuttgart (DE)
(72) Erfinder: Birnstiel, Michael, 04277 Leipzig (DE); Krüger, Detlef, 04229 Leipzig (DE); Schulze, Hans-Joachim, 29392 Wesendorf (DE); Maschmeier, Horst, 32289 Rödinghausen (DE)

(56) Entgegenhaltungen:
- GB-A- 2 373 767
- US-A- 4 685 208
- US-A- 4 793 055

## Beschreibung

Die Erfindung betrifft ein Montageverfahren für Kraftfahrzeuge.

Aus dem Serienfahrzeugbau ist es bekannt, neben einem Hauptmontageband für Kraftfahrzeuge ein Türmontageband anzuordnen, um unabhängig vom Einbau des Interieurs in die lackierte Karosse die Kraftfahrzeugtüren mit Verkleidungsteilen, Fensterhebern, Seitenscheiben u.ä. auszustatten.

So zeigt beispielsweise die WO 2005/110837 A1 eine Fahrstraße als Hauptmontagelinie, von der die Türen abmontiert und einem separaten Türmontageband zugeführt werden. Das Türmontageband ist in zwei Teilbänder aufgeteilt. Auf dem einen Teilband werden nacheinander alle Vordertüren gefertigt, während auf dem anderen Teilband nacheinander alle Hintertüren gefertigt werden. Der Transport der Türen von und zu den Teilbändern kann dabei auf einer gemeinsamen Transportvorrichtung erfolgen.

Die Vordertüren und die Hintertüren werden auf separaten Türmontagebändern gefertigt, um die Effektivität und die Qualität bei der Türmontage zu verbessern.

Bei Fertigung von verschiedenen Fahrzeugmodellen können sich u.U. die Taktzeiten bei der Türmontage ganz erheblich unterscheiden, so dass Stillstandszeiten in Kauf genommen oder entsprechende Speicherplätze zur Verfügung gestellt werden müssen.

Die Aufgabe der Erfindung besteht darin, ein Montageverfahren für Kraftfahrzeuge dahingehend weiterzuentwickeln, dass Stillstandszeiten und Zwischenspeicher vermieden werden können.

Die Aufgabe wird erfindungsgemäß mit den Merkmalen des Patentanspruchs 1 gelöst. Vorteilhafte Ausgestaltungen der Erfindung ergeben sich aus den Merkmalen der Unteransprüche.

Im Unterschied zum o.g. Stand der Technik werden erfindungsgemäß alle Türen eines Fahrzeugs gemeinsam auf einer Montageplattform gefertigt. Dazu werden die zu fertigen Türen von der auf der Hauptmontagelinie geförderten Rohkarosse abgeschlagen. Jede der Türen wird einem Gestell zugeordnet und an diesem befestigt. Die Gestelle sind geeignet, dass entsprechende Greifer mit den Gestellen hantieren können. Eine Beschädigung der Türen kann somit weitgehend verhindert werden. Anschließend werden die Gestelle mit den daran befestigten Türen durch geeignete Transportmittel, beispielsweise mittels sogenannter Skids, zu einer Übergabestation transportiert, um von dort zur Türmontagelinie umgesetzt zu werden. Bevor die Türmontage beginnt, werden an dieser Übergabestation alle Türen, die zu einer Rohkarosse gehören, mit ihren Gestellen auf einer Montageplattform zusammengefasst. Das heißt, dass sich beispielsweise bei viertürigen Karossen vier Gestelle inkl. der darin befestigten Tür auf einer Montageplattform befinden. Dabei werden die Gestelle so auf die Montageplattform umgesetzt, dass die Innenseite der Türen nach außen zeigen. So sind die zu montierenden Bereiche für den Werker wesentlich besser zugänglich. Während der Türmontage erfährt die Montageplattform je nach gewählter Taktzeit einen entsprechenden Vorschub. Die Türen werden nach und nach fertig gestellt. Von Vorteil bei diesem Verfahren ist, dass die Montageplattform unabhängig von dem gerade zu fertigenden Fahrzeugmodell einheitliche Halterungen für die Gestelle aufweisen kann. Die konstruktiven Unterschiede können durch entsprechende Gestaltung der Gestelle ausgeglichen werden. Ferner kann die Türmontagelinie räumlich von der Hauptmontagelinie getrennt angeordnet werden, da die Gefahr einer Beschädigung beim Transport reduziert ist. Da die Türen von der Entnahmestation bis zur Zuführstation der Hauptmontagelinie stets nur mit Gestell transportiert, gefördert oder bearbeitet werden, können alle Greif-, Hebe- und Transportvorrichtungen auf die Gestelle abgestimmt werden. Die Instandhaltung kann somit vereinfacht werden. Auf Modelwechsel kann mit geringem Aufwand reagiert werden.

Sofern weitere Transportstrecken zurückgelegt oder Etagen überbrückt werden müssen, kann der Transport der Gestelle auf einer gemeinsamen Transporteinheit erfolgen. Eine Zwischenspeicherung ist dadurch auch möglich.

Vorzugsweise kann die gemeinsame Transporteinheit ein sogenannter Transportskid sein, der auf einem Speicherband umläuft. Das Speicherband kann platzsparend in einer anderen Ebene, beispielsweise auf einer Zwischendecke oberhalb der Hauptmontagelinie, angeordnet sein. Durch das Speicherband lassen sich unterschiedliche Herstellungszeiten zwischen Entnahme- und Zuführstation der Hauptmontagelinie und der Fertigungszeit auf der Türmontagelinie ausgleichen.

Um die Gestelle von der gemeinsamen Transporteinheit auf die gemeinsame Montageplattform umzusetzen, ist das Speicherband mit einem Montageplattformspeicher verbunden. Die Gestelle können beispielsweise mittels Greifer von der Transporteinheit auf die Montageplattform umgesetzt werden.

Die gemeinsame Montageplattform wird anschließend mit den darauf befindlichen Gestellen der Türmontagelinie zugeführt.

Sofern sich das Speicherband und/oder der Montageplattformspeicher in einer anderen räumlichen Ebene als das Türmontageband befindet, kann die Montageplattform durch einen Vertikalförderer zur Türmontagelinie gefördert werden.

Für eine verbesserte Zugänglichkeit bei der Montage der Türen kann vorgesehen werden, dass jedes Gestell auf der Montageplattform um eine parallel zur Flächennormale (N) verlaufende Schwenkachse der Montageplattform verschwenkt werden kann.

Sofern sich das Speicherband und/oder der Montageplattformspeicher in einer anderen räumlichen Ebene als das Türmontageband befindet, kann nach der Türmontage am Ende der Türmontagelinie die Montageplattform mit einem Vertikalförderer zum Montageplattformspeicher gefördert wird.

Anschließend können die Gestelle mit den fertig gestellten Türen von der Montageplattform auf eine leere Transporteinheit umgesetzt werden.

Diese Transporteinheit kann bei Bedarf auf dem Speicherband zwischengepuffert und zeitgenau zu einer Zuführstation des Hauptmontagebandes gefördert werden.

Umgekehrt zur oben beschriebenen Entnahme können nunmehr die Gestelle von ihrer Transporteinheit entnommen und mittels eines Hebers der Zuführstation zugeführt werden.

An der Zuführstation werden die fertig montierten Türen aus ihrem jeweiligen Gestell entnommen und an die selbe Rohkarosse, von der die Türen an der Entnahmestation ursprünglich entnommen wurden, wieder angeschlagen.

Weitere vorteilhafte Ausgestaltungen sowie eine bevorzugte Ausgestaltungsform werden im folgenden anhand der Zeichnung näher erläutert. Dabei zeigen:
- Figur 1: eine schematische Darstellung eines erfindungsgemäßen Verfahrens,
- Figur 2: eine bevorzugte Ausgestaltung des erfindungsgemäßen Verfahrens,
- Figur 3: Gestelle auf einer Transporteinheit,
- Figur 4: eine Montageplattform in einer Seitenansicht sowie

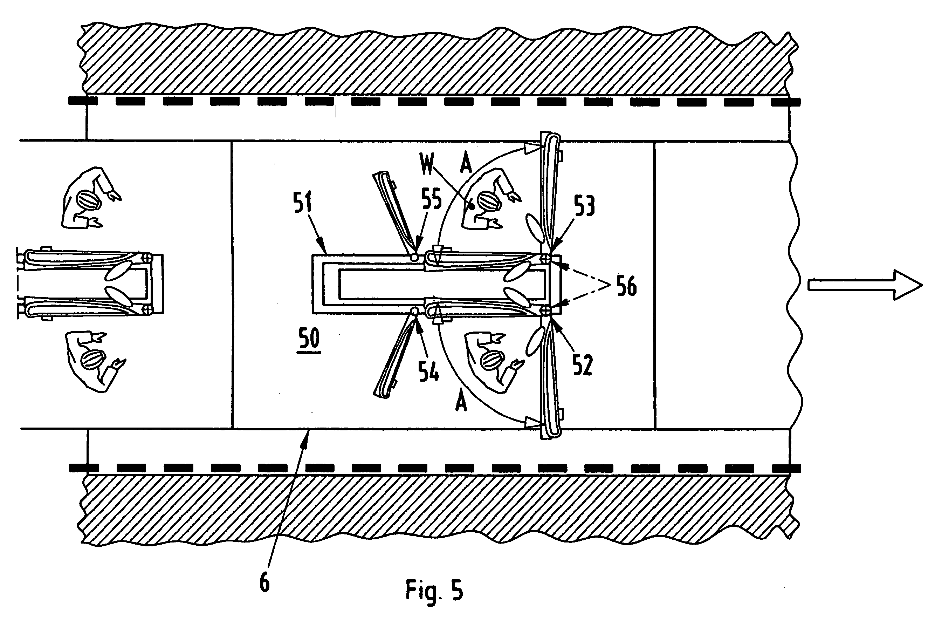

- Figur 5: eine Draufsicht auf die Türmontagelinie mit einer Montageplattform gemäß Figur 4.

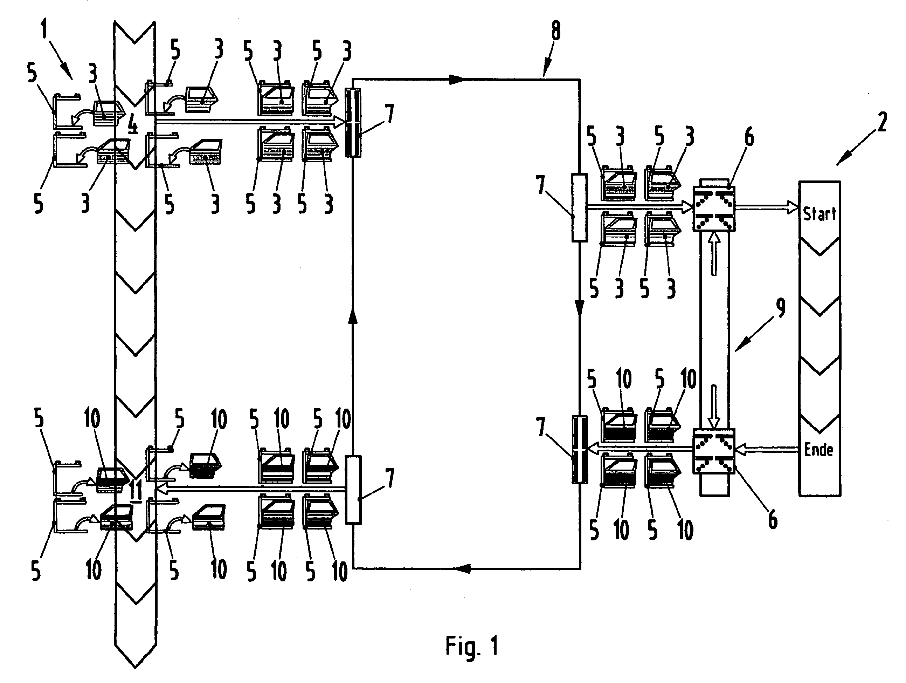

Die schematische Darstellung gemäß Figur 1 zeigt eine Draufsicht auf das erfindungsgemäße Verfahren. Eine Hauptmontagelinie 1 und eine Türmontagelinie 2 sind räumlich voneinander getrennt angeordnet.

Um an der Hauptmontagelinie 1 zum Einbau des Interieurs eine verbesserte Zugänglichkeit in den Innenraum der Rohkarosse zu erhalten, werden die Türen 3 auf der Türmontagelinie 2 montiert.

Die Rohkarossen werden mittels entsprechender Fördertechnik zusammen mit ihren Türen von der Lackiererei oder der Hohlraumkonservierung an die Hauptmontagelinie gebracht. Sobald die Rohkarosse an einer Entnahmestation 4 der Hauptmontagelinie gelangt, werden die Türen 3 von der Rohbaukarosse abgebaut. Jede der abgebauten Tür 3 wird an ein Gestell 5 befestigt. Auf die Art und Weise der Befestigung der Türen an den Gestellen wird weiter unten näher eingegangen.

Anschließend werden die - in diesem Fall vier - Gestelle zu einer Transporteinheit 7 gefördert, die auf einem Speicherband 8 gemäß der eingezeichneten Pfeile umläuft. Der Antrieb der Transporteinheiten 7 kann entweder an den Transporteinheiten selbst oder an der Laufschiene vorgesehen sein.

Die Transporteinheit 7 wird zusammen mit den darauf abgestellten Gestellen 5 auf dem Speicherband 8 zu einer Position gefördert, an der die Gestelle 5 entnommen und auf eine Montageplattform 6 umgesetzt werden. Dabei werden die vier Gestelle 5 wiederum zusammen gehandhabt. Auf der Montageplattform 6 sind Haltevorrichtungen für die Gestelle 5 vorgesehen, in die diese eingesetzt und befestigt werden.

Die Montageplattform 6 gelangt dann über entsprechende Fördereinrichtungen gemäß dargestellten Pfeil zum Start der Türmontagelinie 2. Nach Fertigstellung der Türen wird am Ende der Türmontagelinie 2 gemäß dargestellten Pfeil die Montageplattform 6 zum Montageplattformspeicher 9 überführt. Hier werden die fertig gestellten Türen, die hier mit Bezugsziffer 10 bezeichnet sind, mit ihren Gestellen 5 auf eine leere Transporteinheit 7 abgestellt.

Auf dem umlaufenden Speicherband 8 wird die Transporteinheit 7 in Richtung der Hauptmontagelinie 1 transportiert. Sofern die Fertigungszeit für die Montage der Rohkarosse die der Türenmontage übersteigt, kann die Transporteinheit 7 hier zwischengepuffert werden.

Von der Transporteinheit 7 werden die Gestelle 5 mit den fertig gestellten Türen 10 entnommen und an der Zuführstation 11 der Hauptmontagelinie 1 wieder zugeführt. Die Türen 10 werden dazu aus den Gestellen 5 gelöst und an die inzwischen mit Interieur u.ä. ausgestattete Karosserie angeschlagen.

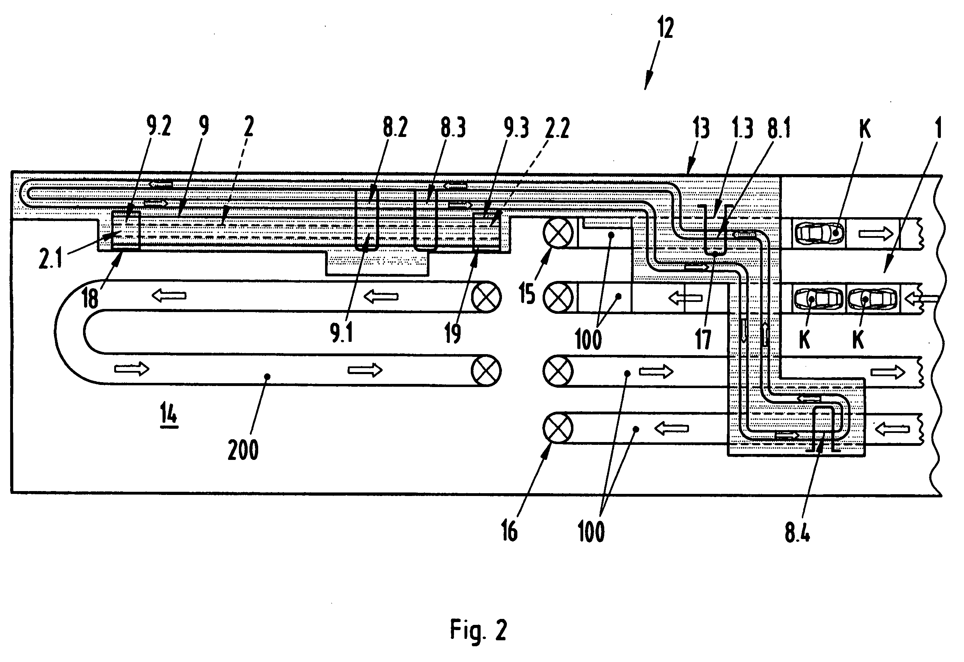

In Figur 2 ist eine bevorzugte Anordnung einer Fahrzeugfertigung 12, die Gebrauch von dem erfindungsgemäßen Verfahren macht, in einer Ansicht von oben dargestellt. Der grau markierte Bereich stellt eine Zwischendecke 13 dar, die zumindest in teilweiser Überdeckung oberhalb der Hauptmontagelinie 1 und der Türmontagelinie 2 in einer Montagehalle 14 angeordnet ist. Auf der Zwischendecke 13 befinden sich das Speicherband 8 und der Montageplattenspeicher 9.

Die Hauptmontagelinie 1 verläuft einer ersten Arbeitsstation 15 durch die Montagehalle 14 bis zu einer letzten Arbeitsstation 16. Dabei werden die zu fertigenden Karossen K taktweise von Arbeitsstation zu Arbeitsstation gefördert. In Abhängigkeit der vorzunehmenden Arbeiten ist die Hauptmontagelinie 1 aus mehrere Teilmontagelinien zusammengesetzt, wobei die Karossen von einer Schubplattenlinie 100 auf eine Elektrohängebahn 200 mittels geeigneter Fördertechnik umgesetzt werden. Bei den zu fertigenden Karosserien K handelt es sich um lackierte Fahrzeugkarossen, deren Innenraum, Motorraum und Kofferraum im weiteren Verlauf der dargestellten Hauptmontagelinie 1 mit Interieur versehen werden. Die Türen werden zu diesem Zweck von der Karosse abgeschlagen und auf der Türmontagelinie 2 entsprechend fertiggestellt.

Die zu fertigenden Karossen K werden an der mit Bezugsziffer 15 gekennzeichneten Position auf die Hauptmontagelinie 1 aufgesetzt. Im weiteren Verlauf wird die Karosse K auf einer Schubplatte bis zu der mit 1.3. markierten Position transportiert, bei der die Türen von der Karosserie demontiert werden. Diese Position 1.3 entspricht der in Figur 1 als Entnahmestation 4 beschriebenen Arbeitsstation der Hauptmontagelinie 1. Die demontierten Türen werden jeweils rechts und links in die neben der Schubplatte bereitgestellten Gestelle eingehängt und dort befestigt. Der Aufbau und die Funktionsweise der Gestelle wird weiter unten noch näher eingegangen. Wie oben bereits ausgeführt, ist für jede Tür ein Gestell vorgesehen. Die beiden Gestelle einer Karossenseite werden mittels einer ersten Hubstation 17 auf die Ebene der Zwischendecke 13 angehoben und an der mit 8.1 bezeichneten Position gemeinsam auf eine Transporteinheit umgesetzt. Sobald der Werker die beiden Gestelle der anderen Karossenseite mit den entsprechenden Türen bestückt hat, werden diese ebenfalls mit der ersten Hubstation auf die Ebene der Zwischendecke 13 angehoben und auf die gleiche Transporteinheit gesetzt.

Jede Transporteinheit läuft auf dem Speicherband gemäß der eingezeichneten Pfeilrichtung auf dem Speicherband 8 um. Während die Karossen K auf der Hauptmontagelinie 1 ohne die Türen entsprechend den eingezeichneten Pfeilen gefördert und nach und nach fertig gestellt werden, werden die an Position 8.1 auf die Transporteinheit gesetzten Gestelle an die mit Bezugsziffer 8.2 gekennzeichnete Position transportiert.

Hier findet ein Umsetzen der Gestelle von der Transporteinheit auf eine gemeinsame Montageplatte statt, die sich auf dem Montageplattenspeicher 9 an Position 9.1 befindet. Das Umsetzen der Gestelle erfolgt dabei so, dass die Innenseite der Türen von außen zugänglich sind. Die Montageplatte wird mit den darauf abgesetzten Gestellen von dieser Position 9.1 gemäß Pfeil zu einem ersten Heber 18 an Position 9.2 verbracht und von diesem von der Zwischendecke 13 auf die Ebene der Türmontagelinie 2 abgesenkt. An dieser Position 2.1 beginnt die Türmontagelinie 2, die in dieser Darstellung gestrichelt dargestellt ist und deckungsgleich zum Montageplattenspeicher 9 verläuft.

Auf der Türmontagelinie 2 werden die Montageplatten mit ihren in den Gestellen gehaltenen Türen taktweise bis zu Position 2.2, also zum Ende der Türmontagelinie 2, transportiert. Während des taktweisen Vorschubs werden die Türen mit Fenstern, Fensterhebern, Innenverkleidungsteilen u.ä. ausgestattet. Weiter unten wird detailliert auf diese Montage eingegangen werden.

Am Ende der Türmontagelinie 2 an Position 2.2 ist ein zweiter Heber 19 angeordnet, der die Montageplatte mit den nunmehr fertig gestellten Türen wieder auf die Ebene der Zwischendecke 13 anhebt. Von dieser mit 9.3 bezeichneten Position wird die Montageplatte gemäß Pfeil zu einer zweiten Umsetzstation 9.4 gefördert, bei der die Gestelle inklusive fertige Türen gemeinsam von der Montageplatte wieder auf eine auf dem Speicherband 8 bereitgestellte leere Transporteinheit umgesetzt werden. Von dieser Position 8.3 gelangt die Transporteinheit auf dem Speicherband 8 zu einer Position 8.4, bei der die Gestelle wieder von der Transporteinheit abgenommen und von der Zwischendecke 13 mittels einer zweiten Hubstation 20 an der in Figur 1 als Zuführstation bezeichneten Arbeitsstation der Hauptmontagelinie 1 abgesenkt werden. Die sich an dieser Position 1.4 befindende Karosse ist genau die Karosse K, von der die Türen an Position 1.3 abgenommen wurden. Die Türen werden hier an die inzwischen mit Innenausstattung versehene Karosse angeschlagen.

Die nunmehr leergeräumte Transporteinheit auf dem Speicherband 8 wird von Position 8.4 wieder zu der ersten Hubstation 17 an Position 8.1 gefördert und kann dort die nächsten Gestelle mit Türen aufnehmen.

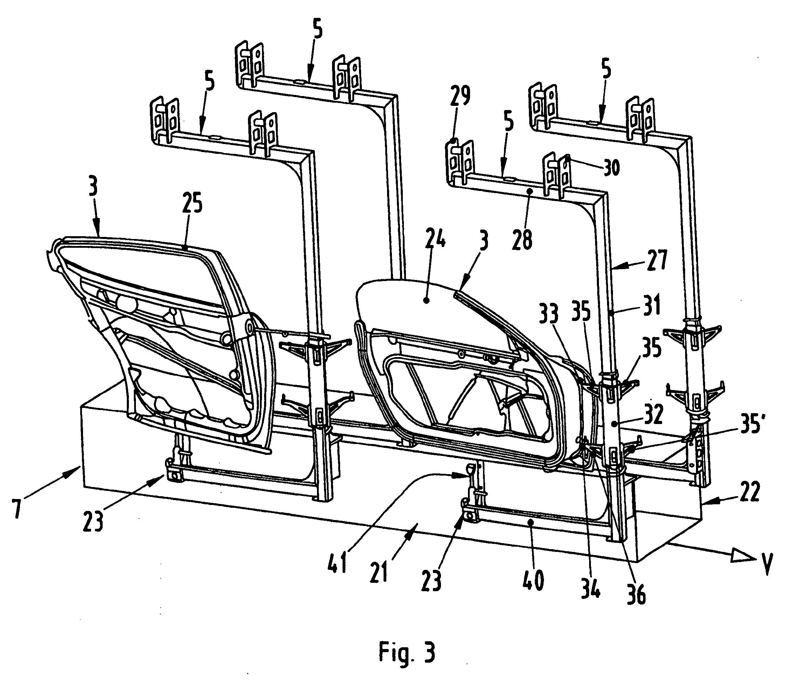

In Figur 3 ist eine Transporteinheit 7 näher dargestellt, die vier der Gestelle 5 und damit alle vier Türen einer Karosse aufnehmen kann. Die Transporteinheit 7 weist an ihren Längsseiten 21 und 22 Haltevorrichtungen 23 für die Gestelle 5 auf, die als Schnellverschlüsse ausgebildet sein können. Die Haltevorrichtungen 23 sind so gestaltet, dass eine Bewegung der Gestelle 5 beim Vorschub der Transporteinheit 7 gemäß der eingezeichneten Transportrichtung V weitestgehend unterbunden sind.

Alle vier Gestelle 5 sind baugleich und für die Aufnahme von Vorder- oder Hintertüren sowie Türen unterschiedlicher Fahrzeugmodelle geeignet. Der Übersichtlichkeit halber sind in Figur 3 nur zwei der vier Gestelle 5 mit daran befestigten Türen 3 dargestellt, wobei mit Bezugsziffer 24 eine Vordertür und mit Bezugsziffer 25 eine Hintertür bezeichnet ist.

Um den Aufbau und die Funktionsweise der Gestelle 5 näher zu erläutern wird das die Vordertür 24 aufnehmende Gestell 5 im folgenden beschrieben.

Das Gestell 5 umfasst einen aus seiner Normalposition um 90° nach links gedrehten U-förmigen Rohrrahmen 27, von dessen oberen Schenkel 28 zwei Bügel 29, 30 nach oben abstehen. Diese Bügel 29, 30 sind für korrespondierende Greifer so ausgestaltet, das das oben beschriebene Anheben, Absenken oder Umsetzen des Gestells 5 möglich ist.

Der mittlere senkrecht verlaufende Abschnitt 31 des Rohrrahmens 27 ist mit einer Revolverhalterung 32 für die Scharniere 33 und 34 der Vordertür 24 versehen. Die Revolverhalterung 32 weist einen oberen Scharnierwinkel 35 für den Eingriff in das obere Scharnier 33 und einen unteren Scharnierwinkel 36 für den Eingriff in das untere Scharnier 34 auf. Damit Türen unterschiedlicher Fahrzeugtypen auf ein und derselben Montagelinie gefertigt werden können, lässt sich die Revolverhalterung 32 durch Anheben und Verdrehen in eine andere Winkelposition bringen, so dass zwei andere Scharnierwinkel 35' und 36' zum Einhängen der Tür zur Verfügung stehen. Diese Scharnierwinkel 35' und 36' sind auf die Scharniere der Tür des anderen Fahrzeugtyps abgestimmt.

Der untere Schenkel 40 des Rohrrahmens 27 ist an seinem freien Ende mit einer Fixiereinrichtung 41 ausgestattet, die die Vordertür 24 an dem Gestell 5 festlegt. Diese Fixiereinrichtung 41 ist durch wenige Handgriffe leicht zu lösen, so dass für bestimmte Arbeiten die Türe 24 um ihre Scharniere 33, 34 aus der vom Gestell 5 aufgespannten Ebene verschwenkt werden kann. Solche Arbeiten können beispielsweise das Verkleben von Dichtungen im Bereich der vorderen Türstirnseite sein.

In der Regel ist die Vordertür 24 über die drei Punkte, nämlich den Scharnieren 33, 34 und der Fixiereinrichtung 41 an dem Gestell 5 unbeweglich gehalten.

An der Position 1.3 der Hauptmontagelinie 1 werden zwei leere Gestelle 5 rechts und zwei leere Gestelle 5 links der Schubplatte zur Verfügung gestellt. Ein Werker montiert die jeweilige Tür 3 von der lackierten Karosse K ab und hängt diese in das dafür vorgesehene Gestell 5 ein. Sind alle vier Gestelle 5 bestückt, werden diese durch die Hubstation 17 auf die Ebene der Zwischendecke 13 angehoben und dort an Position 8.1 des Speicherbandes 8 auf einer leeren Transporteinheit 7 befestigt.

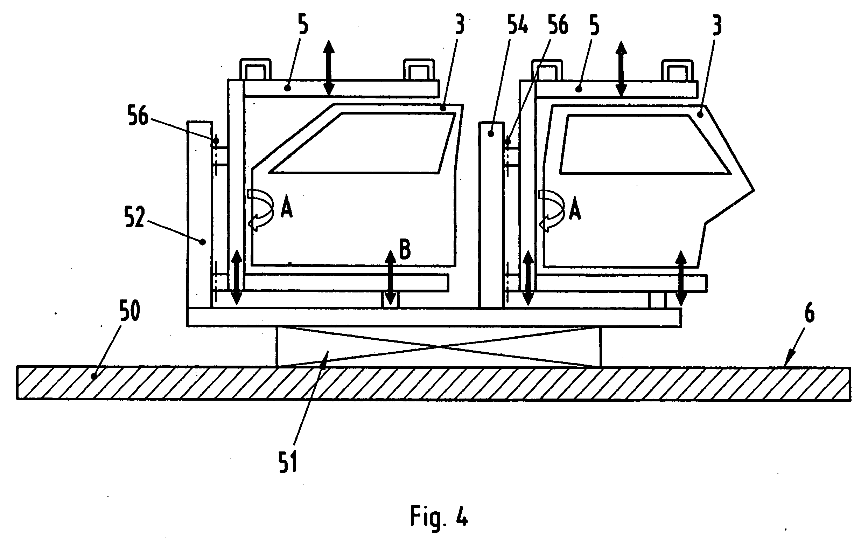

Aus den Figuren 3 und 4 geht eine Montageplatte 6 hervor, wie sie auf der Türmontagelinie 2 vorgesehen ist. Die Montageplatte 6 wird auf einem Hubtisch 51, der auf einer Schubplatte 50 steht, befestigt. Auf der Montageplatte 6 sind für die Aufnahme der Vordertüren zwei vordere Pfosten 52 und 53 sowie für die Aufnahme der Hintertüren zwei hintere Pfosten 54 und 55 vorgesehen. Die Pfosten 52, 53, 54, 55 nehmen jeweils eines der Gestelle 5 auf. Die Gestelle 5 können dabei gemäß Pfeil A um eine Schwenkachse 56 verschwenkt werden. Dadurch kann der Werker W die Türen 3 sowohl von deren Innenseite als auch von deren Haubenseite bearbeiten.

Der Hubtisch 51 lässt sich gemäß Pfeil B auf und ab bewegen, so dass je nach Arbeitsaufgabe eine ergonomisch günstige Position für den Werker W eingestellt werden kann.

## Patentansprüche

1. Montageverfahren für Kraftfahrzeuge mit einer Hauptmontagelinie (1) und einer Türmontagelinie (2), umfassend folgende Schritte:
a) Entnahme der zu fertigenden Türen (3) einer Rohkarosse an einer Entnahmestation (4) der Hauptmontagelinie (1),
b) Zuordnen jeder Tür (3) zu einem Gestell (5),
c) Transportieren der Gestelle (5) zur Türmontagelinie (2),
**dadurch gekennzeichnet, dass**
d) die Türmontage auf einer Montageplattform (6) erfolgt, wobei alle zu fertigenden Türen (3) der Rohkarosse gemeinsam der Montageplattform (6) zugeordnet werden.

2. Montageverfahren nach Anspruch 1,
**dadurch gekennzeichnet,**
**dass** der Transport der Gestelle (5) zwischen Schritt c) und Schritt d) auf einer gemeinsamen Transporteinheit (7) erfolgt.

3. Montageverfahren nach Anspruch 2,
**dadurch gekennzeichnet,**
**dass** die gemeinsame Transporteinheit (7) ein Transportskid ist, der auf einem Speicherband (8) umläuft.

4. Montageverfahren nach Anspruch 3,
**dadurch gekennzeichnet,**
**dass** das Speicherband (8) mit einem Montageplattformspeicher (9) derart verbunden ist, dass alle Gestelle (5) zusammen mit den zu fertigenden Türen (3) von der gemeinsamen Transporteinheit (7) auf die gemeinsame Montageplattform (6) umgesetzt werden.

5. Montageverfahren nach Anspruch 4,
**dadurch gekennzeichnet,**
**dass** die gemeinsame Montageplattform (6) der Türmontage (2) zugeführt wird.

6. Montageverfahren nach einem oder mehreren der vorgenannten Ansprüche,
**dadurch gekennzeichnet,**
**dass** die Gestelle (5) mit den zu fertigenden Türen (3) durch einen Heber der Transporteinheit (7) des Speicherbandes (8) zugeordnet werden.

7. Montageverfahren nach einem oder mehreren der vorgenannten Ansprüche,
**dadurch gekennzeichnet,**
**dass** die Montageplattform (6) durch einen Vertikalförderer zur Türmontagelinie (2) gefördert werden.

8. Montageverfahren nach einem oder mehreren der vorgenannten Ansprüche,
**dadurch gekennzeichnet,**
**dass** jedes Gestell (5) auf der Montageplattform (6) um eine parallel zur Flächennormale (N) verlaufende Schwenkachse der Montageplattform (6) verschwenkt werden kann.

9. Montageverfahren nach einem oder mehreren der vorgenannten Ansprüche,
**dadurch gekennzeichnet,**
**dass** nach dem Schritt d) die Montageplattform (6) am Ende der Türmontagelinie (2) mit einem Vertikalförderer zum Montageplattformspeicher (9) gefördert wird.

10. Montageverfahren nach Anspruch 9,
**dadurch gekennzeichnet,**
**dass** die Gestelle (5) mit den fertigen Türen (10) von der Montageplattform (6) auf eine leeren Transporteinheit (7) umgesetzt werden.

11. Montageverfahren nach Anspruch 10,
**dadurch gekennzeichnet,**
**dass** die Transporteinheit (7) auf dem Speicherband (8) zu einer Zuführstation (11) des Hauptmontagebandes (1) gefördert wird.

12. Montageverfahren nach Anspruch 11,
**dadurch gekennzeichnet,**
**dass** die Gestelle (5) von ihrer Transporteinheit (7) entnommen und mittels eines Hebers der Zuführstation (11) zugeführt werden.

13. Montageverfahren nach Anspruch 12,
**dadurch gekennzeichnet,**
**dass** an der Zuführstation (11) die fertig montierten Türen (10) aus ihrem jeweiligen Gestell (5) entnommen und an die selbe Rohkarosse, von der die Türen (3) an der Entnahmestation (4) ursprünglich entnommen wurden, wieder angeschlagen werden.

## Claims

1. Assembly method for motor vehicles having a main assembly line (1) and a door assembly line (2), comprising the following steps:
a) removal of the doors (3) to be produced from a body in white at a removal station (4) of the main assembly line (1),
b) assignment of each door (3) to a frame (5),
c) transporting of the frames (5) to the door assembly line (2),
**characterized in that**
d) the door assembly takes place on an assembly platform (6), all the doors (3) to be produced from the body in white being assigned jointly to the assembly platform (6).

2. Assembly method according to Claim 1, **characterized in that** the transporting of the frames (5) between step c) and step d) takes place on a common transport unit (7).

3. Assembly method according to Claim 2, **characterized in that** the common transport unit (7) is a transport skid which circulates on a storage belt (8).

4. Assembly method according to Claim 3, **characterized in that** the storage belt (8) is connected to an assembly platform store (9) in such a way that all the frames (5) are changed over together with the doors (3) to be produced from the common transport unit (7) onto the common assembly platform (6).

5. Assembly method according to Claim 4, **characterized in that** the common assembly platform (6) is fed to the door assembly station (2).

6. Assembly method according to one or more of the abovementioned claims, **characterized in that** the frames (5) with the doors (3) to be produced are assigned by a lifter to the transport unit (7) of the storage belt (8).

7. Assembly method according to one or more of the abovementioned claims, **characterized in that** the assembly platform (6) is conveyed by a vertical conveyor to the door assembly line (2).

8. Assembly method according to one or more of the abovementioned claims, **characterized in that** each frame (5) can be pivoted on the assembly platform (6) about a pivot axis of the assembly platform (6), which pivot axis extends parallel to the surface perpendicular (N).

9. Assembly method according to one or more of the abovementioned claims, **characterized in that**, after step d), the assembly platform (6) is conveyed at the end of the door assembly line (2) by way of a vertical conveyor to the assembly platform store (9).

10. Assembly method according to Claim 9, **characterized in that** the frames (5) are changed over with the finished doors (10) from the assembly platform (6) onto an empty transport unit (7).

11. Assembly method according to Claim 10, **characterized in that** the transport unit (7) is conveyed on the storage belt (8) to a feed station (11) of the main assembly belt (1).

12. Assembly method according to Claim 11, **characterized in that** the frames (5) are removed from their transport unit (7) and are fed to the feed station (11) by means of a lifter.

13. Assembly method according to Claim 12, **characterized in that** the finally assembled doors (10) are removed from their respective frame (5) at the feed station (11) and are attached again to the same body in white, from which the doors (3) were originally removed at the removal station (4).

## Revendications

1. Procédé de montage pour véhicules automobiles comprenant une ligne de montage principale (1) et une ligne de montage des portes (2), comprenant les étapes suivantes :
a) enlèvement des portes à finir (3) d'une carrosserie brute au niveau d'un poste d'enlèvement (4) de la ligne de montage principale (1),
b) affectation de chaque porte (3) à un bâti (5),
c) transport des bâtis (5) jusqu'à la ligne de montage des portes (2),
**caractérisé en ce que**
d) le montage des portes s'effectue sur une plate-forme de montage (6), toutes les portes à finir (3) de la carrosserie brute étant associées en commun à la plate-forme de montage (6).

2. Procédé de montage selon la revendication 1,
**caractérisé en ce que**
le transport des bâtis (5) entre l'étape c) et l'étape d) s'effectue sur une unité de transport commune (7).

3. Procédé de montage selon la revendication 2,
**caractérisé en ce que**
l'unité de transport commune (7) est un chariot de transport qui circule sur une bande de stockage (8).

4. Procédé de montage selon la revendication 3,
**caractérisé en ce que**
la bande de stockage (8) est rattachée à un système de stockage (9) de la plate-forme de montage, de telle sorte que tous les bâtis (5) sont transférés conjointement avec les portes à finir (3) depuis l'unité de transport commune (7) à la plate-forme de montage commune (6).

5. Procédé de montage selon la revendication 4,
**caractérisé en ce que**
la plate-forme de montage commune (6) est associée au montage des portes (2).

6. Procédé de montage selon l'une quelconque ou plusieurs des revendications précédentes,
**caractérisé en ce que**
les bâtis (5) avec les portes à finir (3) sont affectés à l'unité de transport (7) de la bande de stockage (8) au moyen d'un dispositif de levage.

7. Procédé de montage selon l'une quelconque ou plusieurs des revendications précédentes,
**caractérisé en ce que**
la plate-forme de montage (6) est transportée par un transporteur vertical jusqu'à la ligne de montage des portes (2).

8. Procédé de montage selon l'une quelconque ou plusieurs des revendications précédentes,
**caractérisé en ce que**
chaque bâti (5) sur la plate-forme de montage (6) peut être pivoté autour d'un axe de pivotement de la plate-forme de montage (6) s'étendant parallèlement à la perpendiculaire à la surface (N).

9. Procédé de montage selon l'une quelconque ou plusieurs des revendications précédentes, **caractérisé en ce qu'**après l'étape d), la plate-forme de montage (6) à la fin de la ligne de montage des portes (2) est transportée avec un transporteur vertical jusqu'au système de stockage (9) de la plate-forme de montage.

10. Procédé de montage selon la revendication 9,
**caractérisé en ce que**
les bâtis (5) avec les portes finies (10) sont transférés de la plate-forme de montage (6) à une unité de transport vide (7).

11. Procédé de montage selon la revendication 10,
**caractérisé en ce que**
l'unité de transport (7) est transportée sur la bande de stockage (8) jusqu'à un poste d'alimentation (11) de la ligne de montage principale (1).

12. Procédé de montage selon la revendication 11,
**caractérisé en ce que**
les bâtis (5) sont enlevés de leur unité de transport (7) et sont acheminés au moyen d'un dispositif de levage au poste d'alimentation (11).

13. Procédé de montage selon la revendication 12,
**caractérisé en ce que**
les portes montées finies (10) sont enlevées au niveau du poste d'alimentation (11) de leur bâti respectif (5) et sont à nouveau remontées sur la même carrosserie brute de laquelle les portes (3) avaient été enlevées initialement au niveau du poste d'enlèvement (4).
